# EUROPÄISCHE PATENTSCHRIFT

(11) **EP 0 582 137 B1**
(45) Veröffentlichungstag und Bekanntmachung des Hinweises auf die Patenterteilung: **22.04.1998**
(21) Anmeldenummer: 93111719.6
(22) Anmeldetag: 22.07.1993
(51) Int. Cl.: G01S 13/02

(54) **Einrichtung zur induktiven Hochfrequenzabfrage von Kennzeichnungsträgern**
Device for inductive high frequency interrogation of identification carriers
Dispositif pour interrogation inductive à haute fréquence de porteurs d'identifications

(30) Priorität: 01.08.1992 DE 9210317 U; 16.04.1993 DE 9305746 U
(43) Veröffentlichungstag der Anmeldung: 09.02.1994
(73) Patentinhaber: DIEHL GMBH & CO., 90478 Nürnberg (DE)
(72) Erfinder: Plasberg, Georg, Dr.-Ing., D-90562 Kalchreuth (DE); Kraft, Wolfgang, D-90607 Rückersdorf (DE); Drummer, Clemens, D-91301 Forchheim (DE); Schindler, Bruno, D-90584 Allersberg (DE)

(56) Entgegenhaltungen:
- EP-A- 0 257 688
- EP-A- 0 440 050

## Beschreibung

Die Erfindung betrifft eine Einrichtung gemäß dem Oberbegriff des Anspruches 1.

Eine derartige Einrichtung ist aus der DE-PS 40 04 196 bekannt. Der darin beschriebene Kennzeichnungsträger kann als batterieloser Transponder bezeichnet werden, weil er seine Betriebsenergie zum Auslesen des aktuellen Dateninhaltes aus dem Abfragefeld erhält. Die über das Abfragefeld übermittelte Information kann, wie dort vorgesehen, variabel sein. Im Rahmen vorliegender Erfindung können die Kennzeichnungsträger aber auch mit festen, nur einmalig vorkommenden Individualisierungscodes ausgestattet sein, um etwa bei der automatischen Montage Teile zu kennzeichnen oder bei sportlichen Wettkämpfen den Zieleinlauf der mit solchen Kennzeichnungsträgern ausgestatteten Teilnehmer automatisch und manipulationssicher erfassen zu können, wie etwa im DE-GM 92 10 317 insbesondere hinsichtlich des Einsatzes in einem Echtzeit-Erfassungssystem für Preisflüge im Brieftaubensport näher beschrieben. Dabei weist jeder Kennzeichnungsträger eine von einem Kern getragene Spule auf, die zusammen mit einem Kondensator einen auf die Frequenz des Abfragefeldes abgestimmten Schwingkreis bildet, der an eine integrierte Versorgungs- und Antwortschaltung angeschlossen ist, wie etwa in der WO 92/15105 näher beschrieben. Je nach dem Einsatzfall kann die Spule samt Kondensator und Schaltungsträger gekapselt bzw. in eine Befestigungseinrichtung integriert sein, bei der es sich im Falle des Taubensportes um einen um das Bein einer Taube herumlegbaren Ring handelt. Dieser ist nicht zerstörungsfrei wieder entfernbar, so daß die Taube durch ihren elektronischen Kennzeichnungsträger eindeutig identifiziert ist, da der darin abgespeicherte Code kein zweites Mal an einen Taubenring vergeben wird.

Keine Funktionsprobleme sind zu erwarten, wenn der von einem Antennenträger zu erfassende Bereich durch das Feld einer einzigen Antennenspule überdeckt wird. Denn diese kann dann im Dauerbetrieb arbeiten, und sobald ein Kennzeichnungsträger sich auch nur vorübergehend in ihrem magnetischen Wechselfeld befindet, wird er zur Kenndatenübertragung aktiviert. Diese Informationsübertragung besteht in einer zeitseriell codierten Belastung der magnetischen Antenne im Kennzeichnungsträger mit daraus resultierender zeitseriell codierter Bedämpfung der Abfrage-Antennenspule, woraus bei hochohmiger Einspeisung der Hochfrequenzenergie eine Folge von Amplitudenabsenkungen resultiert, die in ein entsprechendes digitales Bitmuster für die weitere Verarbeitung und Auswertung umsetzbar sind.

Solche Bitmuster vermischen sich aber und sind folglich nicht mehr getrennt auswertbar, wenn zwei oder mehr Kennzeichnungsträger mit ihren unterschiedlichen Kennungen überlappend oder sogar gleichzeitig vom Abfragefeld der Antennenspule erfaßt werden.

Der Erfindung liegt deshalb die Aufgabe zugrunde, das technische Problem zu lösen, das auftritt, wenn quasi-gleichzeitig mehrere Kennzeichnungsträger zur Auswertung in den Erfassungsbereich eines Antennenträgers gelangen.

Diese Aufgabe wird erfindungsgemäß im wesentlichen dadurch gelöst, daß die gattungsgemäße Einrichtung auch nach dem Kennzeichnungsteil des Hauptanspruches ausgelegt ist.

Nach dieser Lösung ist der breite Erfassungsbereich eines Antennenträgers aufgeteilt in mehrere nebeneinanderliegende schmalere Teilbereiche, denen jeweils das Feld einer Flach-Antennenspule entsprechend kleineren Durchmessers zugeordnet ist. Falls die Einsatzgegebenheiten nicht ohnehin sicherstellen, daß die einzelnen Kennzeichnungsträger unter hinreichenden wechselseitigen Abständen nebeneinander oder nacheinander in die Felder eines Antennenträgers gelangen, können die einzelnen Teilbereiche durch Leitmittel wie Führungswände gegeneinander abgegrenzt sein. Ein sogenannter Einspringbügel vor dem Heimatschlag einer Brieftaube etwa stellt sicher, daß sich in einem Teilbereich immer nur eine Taube aufhält und hier auch hinreichend lange für ein zuverlässiges Auslesen des Identifikationscodes ihres Kennzeichnungsträgers verweilt, ehe sie mit dem Eintreten in den Schlag dieses Feld des Antennenträgers wieder verläßt.

Um ein Überkoppeln der Antwort eines über einer Antennenspule des Antennenträgers positionierten Kennzeichnungsträgers zur benachbarten Antennenspule und damit eine Überlagerung der Identitätsinformation mit derjenigen eines dort vielleicht gerade ausgewerteten Kennzeichnungsträgers zu vermeiden, sind gemäß einer bevorzugten Weiterbildung der erfindungsgemäßen Lösung bei einer solchen Anordnung mehrerer nebeneinander gelegener Antennenspulen nie zwei einander benachbarte Spulen gerade aktiv, vielmehr zwischen zwei Spulen stets wenigstens eine inaktiv und zweckmäßigerweise sogar kurzgeschlossen. Da die axiale Reichweite eines Feldes typisch in der Größenordnung von Dezimetern und damit in der Größenordnung des Durchmessers der jeweiligen flachen Antennenspule liegt, ist dadurch ein Überkoppeln der Kennzeichnungsträger-Antwort auf auch benachbarte Spulen wirksam unterbunden; d. h. von jeder Antennenspule wird nur der eine Kennzeichnungsträger angesprochen, der unmittelbar über ihrer Querschnittsfläche erfaßt wird. Und da kein Multiplexen über die Serie aller nebeneinander angeordneten Antennenspulen nacheinander erfolgt, sondern nur eine Umschaltung zwischen z.B. der Gruppe der geradzahligen und der Gruppe der ungeradzahligen Antennenspulen, die nebeneinander in einem Antennenträger enthalten sind, kann jede Gruppe (mit beliebig vielen Antennenspulen) hinreichend lange für eine sichere Abfrage der von ihr erfaßten Kennungsträger eingeschaltet bleiben, ohne daß es zu unvertretbaren Totzeiten im Intervallbetrieb der einzelnen Antennenspule kommt.

Um hinsichtlich der Erfassungsbreite flexibel zu sein, ist es zweckmäßig, gemäß einer Weiterbildung der Erfindung die Antennenträger nicht mit zu vielen Antennenspulen auszustatten, sondern Antennenträger mit einer relativ niedrigen Standard-Anzahl von Antennenspulen vorzusehen, vorzugweise mit zwei Gruppen von je zwei Antennenspulen. Daraus läßt sich dann ein beliebig großes Antennenfeld für einen geometrisch entsprechend konfigurierten Erfassungsbereich zusammenstellen. Damit die zwangsläufigen, zeitlich nicht stabilen Frequenzabweichungen zwischen den Antennenspulen benachbart betriebener Antennenträger nicht zu Schwebungserscheinungen führen, die die Auswertung der von dem Kennzeichnungsträgern abgefragten Informationen behindern oder gar unterbinden können, werden zweckmäßigerweise alle Antennenspulen (der nicht gerade kurzgeschlossenen Gruppen) aller Antennenträger phasenstarr mit derselben Frequenz und dafür aus demselben Hochfrequenzgenerator gespeist. Das vermeidet außer den elektrischen Schwebungserscheinungen auch magnetische Verzerrungen, wie sie sonst aufgrund Feldüberlagerungen von gleichzeitig betriebenen Spulen auftreten könnten.

Ebenfalls auf magnetische Störeinflüsse ist es zurückzuführen, daß die Abfragefelder eines Antennenträgers im Rhythmus der Multiplex-Spulenumschaltung eines ganz anderen Antennenträgers gestört werden können. Derartige Rückwirkungen werden vermieden, wenn alle Spulen aller Antennenträger synchron umgeschaltet werden, also phasenstarr mit der gleichen Multiplexfrequenz und somit aus einer zentral für alle Antennenträger wirksamen Umschaltsteuerung betrieben werden. Diese wird sogar zweckmäßigerweise mit dem Hochfrequenz-Abfragefeld synchronisiert, wofür der Multiplextakt über einen Frequenzteiler aus dem Hochfrequenzgenerator gewonnen werden kann. Dadurch erreicht man bei jeder Umschaltung zwischen den Spulengruppen übereinstimmendes Einschwingverhalten und so optimal kurze Ansprechzeitdauern für das Auslesen der gerade erfaßten Kennzeichnungsträger nach induktiver Einspeisung der Betriebsenergie.

Die von den erfaßten Kennzeichnungsträgern übernommenen Informationen werden in einem Auswertespeicher für die spätere Weiterverarbeitung abgelegt. Dabei werden sie mit einer Echtzeitinformation verknüpft, um die zeitliche Reihenfolge des Erfassens der einzelnen Kennzeichnungsträger (im Rahmen der durch die Umschaltung zwischen den beiden Antennenspulen-Gruppen begrenzten Genauigkeit) eindeutig zu dokumentieren. Da jede Kennung nur einmal vergeben wird, alle Kennzeichnungsträger (und so alle mit ihnen ausgestatteten Individuen), also eindeutig identifiziert sind, kann eine Verwechslung bei der Protokollierung nicht mehr auftreten. Sollten Zweifel an der Singularität der Kennungen etwa der Teilnehmer eines Wettkampfes bestehen, dann können die Kennzeichnungsträger der gemeldeten Wettkampfteilnehmer schon vor dem Start mittels Antennenspulen einmal erfaßt und die dabei gewonnenen Identifikationsinformationen von einem Arbeitsplatzrechner sortiert und ausgedruckt werden; der Sortiervorgang kann dabei daraufhin ausgewertet werden, daß jede Identifikation nur einmal vorkommt - und daß beim Wettkampfeinlauf nur solche Identifikationen berücksichtigt werden, die vor dem Start als gemeldete Teilnehmer erfaßt wurden.

Um nachträgliche Datenmanipulationen sicher auszuschließen, können die codierten Identifikationsinformationen von den ausgelesenen Kennzeichnungsträgern noch vor der Übergabe in den Auswertespeicher und damit gegebenfalls sogar vor der Kombination mit der verschlüsselten Echtzeitinformation eine zusätzliche Sicherungsverschlüsselung erfahren. Diese basiert zweckmäßigerweise auf einem fortlaufenden Zufallsmuster, das im voraus nicht bekannt ist und separat abgespeichert wird. Bei der späteren Verarbeitung der Informationsfolge aus dem Auswertespeicher kann ein Vergleich mit jenem separat abgespeicherten Zufallsmuster erfolgen. Dabei würde auffallen, wenn eine Teilinformation aus dem Auswertespeicher modifiziert oder auch nur an eine andere Stelle verschoben wurde, weil dann die Kontinuität im Vergleich mit dem abgespeicherten Hintergrundmuster gestört wäre.

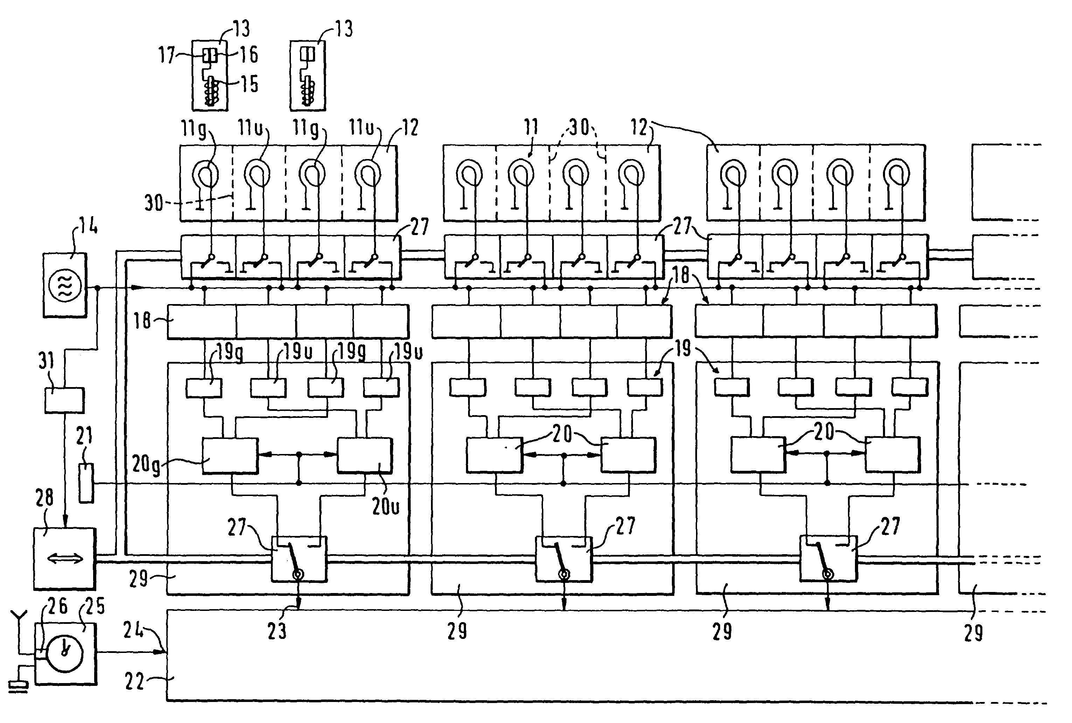

Zusätzliche Alternativen und Weiterbildungen sowie weitere Merkmale und Vorteile der Erfindung ergeben sich aus nachstehender Beschreibung eines in der Zeichnung unter Beschränkung auf das Wesentliche stark abstrahiert und nicht maßstabsgerecht als einpoliges Blockschaltbild veranschaulichten bevorzugten Realisierungsbeispiels zur erfindungsgemäßen Lösung. Die einzige Figur der Zeichnung zeigt die Abfrage mehrerer Antennenspulen auf einem Antennenträger und die Zusammenschaltung mehrerer Antennenträger zu einem breiteren Erfassungsbereich.

Jede der dargestellten Transponder-Abfrageantennen besteht im wesentlichen aus einer axial flachen Antennenspule 11, von denen mehrere achsparallel nebeneinander versetzt in einem Antennenträger 12 gehaltert sind. Jede Antennenspule 11 dient der Abfrage eines Kennzeichnungsträgers 13, der sich hinreichend dicht über der Querschnittsfläche der Antennenspule 11 befindet. Dafür wird die Antennenspule 11 aus einem Hochfrequenz-Generator 14 mit einer Frequenz in der typischen Größenordnung von 100 kHz gespeist. Dieses Hochfrequenzfeld wird von der Ferrit-Antenne 15 des Kennzeichnungsträgers 13 aufgenommen. Deren Ausgangs-Wechselspannung wird in einer Versorgungsschaltung 16 gleichgerichtet und gespeichert, um eine Antwortschaltung 17 zu speisen. In dieser wird ein individuelles serielles Bitmuster aus einem Speicher ausgelesen, um im Rhythmus dieses Musters eine elektrische Bedämpfung der Transponder-Antenne 15 zu bewirken. Die Bedämpfung wiederum bewirkt im gleichen Rhythmus Amplitudenabsenkungen an der stromgespeisten Antennenspule 11, die in einem Analog-Digital-Wandler 18 zur digitalen Weiterverarbeitung umgesetzt und als Identinformationen an ein Pufferregister 19 übergeben werden. Dessen Inhalt wird von einer Verknüpfungsschaltung 20 seriell ausgelesen und dabei mit der aktuellen Information aus einem Schlüsselgeber 21 modifiziert, um schließlich in einen Auswertespeicher 22 übertragen zu werden. Darin erfolgt noch die Verknüpfung der verschlüsselten Identinformation 23 mit einer Echt-Zeitinformation 24 aus einer quarzstabilisierten Uhrenschaltung 25. Deren aktuelle Zeitanzeige kann mittels eines Empfängerdemodulators 26 in bezug auf die über Funk übermittelte aktuelle gesetzliche Zeit überwacht und erforderlichenfalls korrigiert werden.

Um mittels eines Antennenträgers 12 mehrere Kennzeichnungsträger 13 quasi-gleichzeitig zu erfassen, sind mehrere Antennenspulen 11 nebeneinander vorgesehen. Dabei werden jedoch nur solche Kennzeichnungsträger 13 gleichzeitig erfaßt und ausgewertet, die sich nicht unmittelbar nebeneinander im Einflußbereich einer Spule 11 befinden. Denn wenn von einer einzigen Antennenspule 11 mehrere Kennzeichnungsträger 13 gleichzeitig erfaßt würden, dann würden diese auch gleichzeitig ihren Code zurückmelden, was zu einer Überlagerung führen würde, die nicht mehr zur Auswertung differenzierbar sein würde. Andererseits würde eine Multiplex-Abfrage aller Antennenspulen 11 eines Antennenträgers 12 nacheinander für die einzelne Antennenspule 11 im Abfragezyklus jeweils eine so große zeitliche Lücke eintreten lassen, daß ein nur kurzzeitig im Auffaßbereich einer Antennenspule 11 befindlicher Kennzeichnungsträger 13 diesen Bereich schon wieder verlassen haben kann, ehe die räumlich zugeordnete Antennenspule 11 in der zyklischen Folge wieder abgefragt wird. Es ist aber unbedingt zu vermeiden, daß ein Kennzeichnungsträger 13 zwar den Antennenträger 12 passierte, aber daher nicht von einer seiner Antennenspulen 11 wirksam erfaßt wurde.

Deshalb werden die in einem Antennenträger 12 nebeneinander angeordneten Antennenspulen 11 funktional zu zwei miteinander verzahnten Gruppen zusammengefaßt, etwa derart, daß alle geradzahligen Antennenspulen llg und alle ungeradzahligen Antennenspulen 11u jeweils gleichzeitig aber gruppenweise nacheinander wirksam sind. Das reduziert die Abtastlücke auf die Größe einer Abtastzeitspanne, d. h. es sind abwechselnd zunächst nur die erste, dritte, fünfte, ... Antennenspule 11 und dann die zweite, vierte, sechste, ... Antennenspule 11 gleichzeitig aktiv. Jede dieser beiden Gruppen von Antennenspulen llg, 11u bleibt dabei über eine Umschaltsteuerung 28 so lange eingeschaltet, wie es systembedingt erforderlich ist für das Ansprechen und Auslesen eines im Erfassungsbereich eines Antennenträgers 12 befindlichen Kennzeichnungsträgers 13. Diese Funktionszeitspanne ist so bemessen, daß sie höchstens halb so lang ist, wie die typische Mindest-Verweilzeit eines Kennzeichnungsträgers 13 im Feld eines Antennenträgers 12, so daß der Kennzeichnungsträger 13 spätestens nach dem Umschalten von der einen auf die andere Gruppe der Antennenspulen 11 erfaßt und ausgelesen wird, ehe er sich vom Antennenträger 12 wieder zu weit entfernen kann.

Diese zyklische Umschaltung zwischen den beiden Gruppen g/u erfolgt mittels eines Systemes von Wechselschaltern 27, die einerseits den beiden Verknüpfungsschaltungen 20 für die beiden Antennenspulengruppen g/u folgen und andererseits die Antennenspulen 11 der momentan nicht aktiven Gruppe g/u kurzschließen. Durch diesen Kurzschluß einer Antennenspule 11 zwischen zwei gerade aktiven Antennenspulen 11 wird verhindert, daß die von einem Kennzeichnungsträger 13 gerade ausgelesenen Daten in die entfernte, da jenseits der kurzgeschlossenen Spule 11 gelegene aktive Spule 11 eingekoppelt werden; und zugleich wird dadurch verhindert, daß ein Kennzeichnungsträger 13 angesteuert wird, der sich über der Antennenspule 11 einer Gruppe g/u befindet, die momentan gar nicht zur Abfrage über die Verknüpfungsschaltung 20 vorgesehen ist.

So ist durch abwechselnde Gruppen zuordnung nebeneinander befindlicher Antennenspulen 11 eines Antennenträgers 12 und erforderlichenfalls Spur-Leitmittel wie Führungswände 30 zwischen den Teilbereichen eines Antennenträgers 12 sowie durch abwechselnde Aktivierung jeweils nur der Antennenspulen 11 einer der beiden Gruppen g, u sichergestellt, daß auch mehrere Kennzeichnungsträger 13, die sich gleichzeitig vorübergehend im Wirkbereich eines Antennenträgers 12 befinden, ohne gegenseitige Störung in hinreichend rascher Folge in die den Antennenspulen individuell zugeordneten Pufferregister 19 ausgelesen werden können.

Durch die Umrahmung in der Zeichnung ist veranschaulicht, daß zumindest die Funktionen der Pufferregister 19 mit ihren Verknüpfungsschaltungen 20, eventuell aber auch noch die Multiplexer-Funktionen aller Wechselschalter 27, jeweils für eine Gruppe von Antennenspulen 11 und damit für einen Antennenträger 12 durch entsprechende Programmierung eines integrierten Signalprozessors 29 realisierbar sind. Apparativ wird dieser zweckmäßigerweise zusammen mit einer (schaltungsmäßig nicht dargestellten) Energieversorgungsschaltung ins Flachgehäuse des Antennenträgers 12 eingebaut. Das ergibt eine kompakte und in sich funktionstüchtige induktive Abfrageeinheit für Kennzeichnungsträger 13, an die lediglich noch der Hochfrequenz-Generator 14, der Schlüsselgeber 21 und die Umschaltsteuerung 28 anzuschließen sind. Letztere kann sogar als eigenständige Funktionsgruppe entfallen, wenn der Hochfrequenzgenerator 14 über einen Frequenzteiler 31 auch noch eine hinreichend niedrige Taktfrequenz für die bistabile Umschaltfolge der Wechselschalter 27 liefert.

Es wäre unzweckmäßig, da im praktischen Einsatz zu unflexibel, wenn für eine große Anzahl gleichzeitig nebeneinander zu erfassender Kennzeichnungsträger 13 eine entsprechend große Anzahl von in zwei Gruppen funktional zusammengefaßten Antennenspulen 11 in einem einzigen entsprechend breiten Antennenträger 12 untergebracht würden. Zweckmäßiger ist es, einen mehrspuligen Antennenträger 12 für eine relativ kurze Standardbreite auszulegen und bedarfsweise dann mehrere derartiger untereinander gleich aufgebauter Antennenträger 12 nebeneinander anzuordnen und auf den gleichen Auswertespeicher 22 zu schalten. Da die Betriebsfrequenzen der Antennen aber selbst bei Realisierung von Stabilisierungsmaßnahmen nicht absolut starr übereinstimmen, sind dann Schwebungserscheinungen zu erwarten, und die daraus resultierenden Differenzfrequenzen würden die Auswertung der von den Kennzeichnungsträgern-Antwortschaltungen 17 gelieferten Codes stören oder gar unmöglich machen. Bei Betrieb mehrerer Antennenträger 12 in dichter räumlicher Nachbarschaft werden diese deshalb, wie in der Zeichnung berücksichtigt, zweckmäßigerweise sämtlich aus demselben Hochfrequenz-Generator 14 und damit sämtlich mit momentan gleicher Abfragefrequenz gespeist. Dadurch erzeugen sämtliche gerade aktivierte Antennenspulen 11 stets phasengleiche magnetische Wechselfelder, so daß Schwebungserscheinungen und die daraus resultierenden Auswertestörungen nicht mehr eintreten können. Zugleich ist dadurch sichergestellt, daß keine unkontrollierbaren Veränderungen des Erfassungs-Teilbereiches der jeweiligen Antennenspule 11 aufgrund von phasenverschobener Überlagerung eines benachbarten magnetischen Wechselfeldes auftritt, so daß bei gleicher elektromagnetischer Auslegung der einzelnen Antennenspulen 11 jeder Teilbereich eines jeden Antennenträgers 12 gleiche Empfindichkeit hinsichtlich der Abfrage des in seinem Bereich gerade befindlichen Kennzeichnungsträgers 13 aufweist.

Eine weitere Störung der Codegewinnung aus den von unterschiedlichen Antennenträgern 12 erfaßten Kennzeichnungsträgern 13 kann auftreten, wenn die gleichzeitig betriebenen Antennenträger 12 jeweils mit eigener Multiplex-Umschaltfrequenz für die Ansteuerung ihrer Wechselschalter 27 arbeiten, da die Multiplex-Frequenz eines Antennenträgers 12 magnetische Störungen hervorruft, die sich den Koppelmagnetfeldern eines benachbarten Antennenträgers 12 überlagern. Auch diese die gleichartige Auswertung aller von den Antennenträgern 12 erfaßten Kennzeichnungsträger 13 behindernden Effekte werden vollständig vermieden, wenn eine zentrale Umschaltsteuerung 28 für die Multiplex-Wechselschalter 27 aller Antennenträger 12 vorgesehen ist, wenn also die Antennenspulen 11 aller in räumlicher Nachbarschaft betriebener Antennenträger 12 mit derselben Multiplexfrequenz und damit synchron umgeschaltet werden.

So lassen sich Antennenträger 12 mit einer beschränkten Anzahl von in zwei Gruppen g, u abwechselnd betriebenen Antennenspulen 11 zu einem praktisch beliebig großen Erfassungsbereich aus nebeneinander angeordneten Antennenträgern 12 gruppieren, die sämtlich mit gleicher Abfragefrequenz für die Koppelfelder ihrer Antennenspulen 11 und mit gleicher Multiplexfrequenz für die Gruppenumschaltung arbeiten und so keinen wechselseitigen Störungen ausgesetzt sind.

## Patentansprüche

1. Einrichtung zur induktiven Hochfrequenzabfrage von Kennzeichnungsträgern (13) mittels einer Antennenspule (11), an die ein Hochfrequenz-Generator (14) und eine Abfrageschaltung mit einem Analog-Digital-Wandler (18) für den Rhythmus der Bedämpfung der Antennenspule (11) durch den Kennzeichnungsträger (13) angeschlossen sind,
dadurch gekennzeichnet,
daß der Erfassungsbereich eines Antennenträgers (12) in mehrere nebeneinander gelegene Teilbereiche unterteilt ist, in denen jeweils eine axial flache Antennenspule (11) angeordnet ist.

2. Einrichtung nach Anspruch 1,
dadurch gekennzeichnet,
daß nicht unmittelbar einander benachbarte Antennenspulen (11) funktional zu Gruppen (g, u) zusammengefaßt sind und diese Gruppen (g, u) abwechselnd von der Abfrageschaltung erfaßt werden.

3. Einrichtung nach Anspruch 2,
dadurch gekennzeichnet,
daß von den nebeneinander angeordneten Antennenspulen (11) eines Antennenträgers (12) die geradzahligen und die ungeradzahligen zu zwei Gruppen (g, u) zusammengefaßt sind.

4. Einrichtung nach einem der vorangehenden Ansprüche,
dadurch gekennzeichnet,
daß in zyklischer Folge Gruppen (g, u) nicht unmittelbar einander benachbarter Antennenspulen (11) an die Abfrageschaltung geführt sind und die Antennenspulen (11) der anderen Gruppen (u, g) unterdessen kurzgeschlossen sind.

5. Einrichtung nach einem der vorangehenden Ansprüche,
dadurch gekennzeichnet,
daß alle gerade betriebenen Antennenspulen (11) phasenstarr mit der gleichen Hochfrequenz beaufschlagt sind.

6. Einrichtung nach einem der vorangehenden Ansprüche,
dadurch gekennzeichnet,
daß eine mit der Hochfrequenz-Speisung der Antennenspulen (11) phasenstarre Umschaltung zwischen Gruppen (g, u) von nicht unmittelbar einander benachbarten Antennenspulen (11) vorgesehen ist.

7. Einrichtung nach einem der vorangehenden Ansprüche,
dadurch gekennzeichnet,
daß mehrere Antennenträger (12) mit zyklisch einschaltbaren Gruppen (g, u) von Antennenspulen (11) in räumlicher Nachbarschaft aus demselben Hochfrequenz-Generator (14) für den Betrieb ihrer Antennenspulen (11) gespeist sind.

8. Einrichtung nach einem der vorangehenden Ansprüche,
dadurch gekennzeichnet,
daß bei mehreren in räumlicher Nachbarschaft zueinander betriebenen Antennenträgern (12) mit gruppierten Antennenspulen (11) eine phasenstarre Gruppenumschaltung mit gleicher Multiplexfrequenz erfahren.

9. Einrichtung nach einem der vorangehenden Ansprüche,
dadurch gekennzeichnet,
daß die über die Antennenspulen (11) von den Kennzeichnungsträgern (13) abgefragten Informationen im Zuge der Übergabe an einen Auswertespeicher (22) mit einer fortlaufenden Hintergrundinformation aus einem Schlüsselgeber (21) kombiniert werden.

10. Einrichtung nach einem der vorangehenden Ansprüche,
dadurch gekennzeichnet,
daß die über die Antennenspulen (11) von den Kennzeichnungsträgern (13) abgefragten Informationen im Zuge der Übergabe an einen Auswertespeicher (22) mit einer Echt-zeitinformation (24) verknüpft werden.

11. Einrichtung nach Anspruch 10,
dadurch gekennzeichnet,
daß die Echtzeitinformation (24) von einer mit der absoluten gesetzlichen Zeit funkgestützt betriebenen autonomenen Quarzuhr geliefert wird.

## Claims

1. Device for the inductive high-frequency interrogation of identification carriers (13) by means of an aerial coil (11), to which a high-frequency generator (14) and an interrogation circuit with an analog/digital convertor (18) for the rhythm of the damping of the aerial coil (11) by the identification carrier are connected,
characterized in that
the detection area of an aerial carrier (12) is subdivided into several partial areas laid side by side in which in each case an axially flat aerial coil (11) is located.

2. Device according to Claim 1,
characterized in that
aerial coils (11) which are not directly adjacent to one another are functionally united to form groups (g, u) and these groups (g, u) are alternately evaluated by the interrogation circuit.

3. Device according to Claim 2,
characterized in that,
of the aerial coils (11) which are arranged side by side of an aerial carrier (12), the even-numbered and the odd-numbered ones are united to form two groups (g, u).

4. Device according to one of the preceding claims,
characterized in that,
in cyclic sequence, groups (g, u) of aerial coils (11) which are not directly adjacent to one another are conducted to the interrogation circuit and the aerial coils (11) of the other groups (u, g) are meanwhile short-circuited.

5. Device according to one of the preceding claims,
characterized in that
all the even operated aerial coils (11) are loaded rigid in phase with the same high frequency.

6. Device according to one of the preceding claims,
characterized in that
a change-over, rigid in phase with the high-frequency supply of the aerial coils (11), is provided between groups (g, u) of aerial coils (11) which are not directly adjacent to one another.

7. Device according to one of the preceding claims,
characterized in that
several aerial carriers (12) with groups (g, u) of aerial coils (11) which can be cyclically switched on and are in spatial proximity are supplied from the same high-frequency generator (14) for the operation of their aerial coils (11).

8. Device according to one of the preceding claims,
characterized in that
several aerial carriers (12) operating in spatial proximity to one another with grouped aerial coils (11) undergo a phase-locked group change-over with the same multiplex frequency.

9. Device according to one of the preceding claims,
characterized in that
the items of information interrogated by way of the aerial coils (11) from the identification carriers (13), in the course of being delivered to an evaluating store (22), are combined with an item of continuous background information from a code generator (21).

10. Device according to one of the preceding claims,
characterized in that
the items of information interrogated by way of the aerial coils (11) from the identification carriers (13), in the course of being delivered to an evaluating store (22), are linked with an item of real-time information (24).

11. Device according to Claim 10,
characterized in that
the item of real-time information (24) is supplied by an autonomous quartz clock operating with the absolute legal time supported by radio.

## Revendications

1. Dispositif d'interrogation inductive à haute fréquence de supports d'identification (13) au moyen d'une bobine d'antenne (11), à laquelle est raccordé un générateur haute fréquence (14) et un circuit d'interrogation équipé d'un convertisseur analogique-numérique (18) pour le rythme d'amortissement de la bobine d'antenne (11), du fait de l'influence du support d'identification (13), caractérisé
en ce que la zone de détection d'un support d'antenne (12) est subdivisée en plusieurs zones partielles placées les unes à côté des autres, dans chacune desquelles est disposée une bobine d'antenne (11) plate, axiale.

2. Dispositif selon la revendication 1, caractérisé
en ce que des bobines d'antenne (11) non directement voisines les unes des autres sont regroupées fonctionnellement en formant des groupes (g, u) et ces groupes (g, u) étant alternativement détectés par le circuit d'interrogation.

3. Dispositif selon la revendication 2, caractérisé
en ce que, parmi les bobines d'antenne (11) disposées les unes à côté des autres, d'un support d'antenne (12), celles à nombres pairs et celles à nombres impairs sont regroupées en formant deux groupes (g, u).

4. Dispositif selon l'une des revendications précédentes, caractérisé
en ce que, en suivant une succession cyclique, des groupes (g, u) de bobines d'antenne (11) non directement voisines les unes des autres sont reliés au circuit d'interrogation et les bobines d'antenne (11) des autres groupes (u, g) sont mises en court-circuit pendant ce temps.

5. Dispositif selon l'une des revendications précédentes, caractérisé
en ce que toutes les bobines d'antenne (11) justement en train de fonctionner sont sollicitées, avec une phase constante, avec la même haute fréquence.

6. Dispositif selon l'une des revendications précédentes, caractérisé
en ce qu'est prévue une commutation à phase constante, avec l'alimentation à haute fréquence des bobines d'antenne (11), entre les groupes (g, u) de bobines d'antenne (11) non directement voisines les unes des autres.

7. Dispositif selon l'une des revendications précédentes, caractérisé
en ce que plusieurs supports d'antenne (12) présentant des groupes (g, u) pouvant être mis en circuit cycliquement, de bobines d'antenne (11), sont alimentés en voisinage spatial à partir du même générateur haute fréquence (14), pour faire fonctionner leur bobines d'antenne (11).

8. Dispositif selon l'une des revendications précédentes, caractérisé
en ce que, en cas de plusieurs supports d'antenne (12) fonctionnant à proximité spatiale les uns par rapport aux autres, avec des bobines d'antenne (11) groupées, une commutation par groupes avec phase constante est effectuée, avec une fréquence de multiplexage identique.

9. Dispositif selon l'une des revendications précédentes, caractérisé
en ce que les informations obtenues par l'interrogation des supports d'identification (13) à partir des bobines d'antenne (11) sont combinées au cours du transfert à une mémoire d'évaluation (22), à une information d'arrière-plan transmise et issue d'un élément de codage (21).

10. Dispositif selon l'une des revendications précédentes, caractérisé
en ce que les informations obtenues par l'interrogation à partir des supports d'identification (13) par l'intermédiaire des bobines d'antenne (11) sont combinées, au cours du transfert à une mémoire d'évaluation (22), avec une information en temps réel (24).

11. Dispositif selon la revendication 10, caractérisé
en ce que l'information en temps réel (24) est fournie par un horloge à quartz à fonctionnement autonome, radio-commandée, utilisant le temps légal absolu.
